Europäisches Patentamt

European Patent Office

Office européen des brevets

(11) Veröffentlichungsnummer: **0 340 399**
**A1**

(12) **EUROPÄISCHE PATENTANMELDUNG**

(21) Anmeldenummer: 89103213.8

(22) Anmeldetag: 23.02.89

(51) Int. Cl.⁴: **B64D 7/08** , **F41F 3/06**

(30) Priorität: 03.05.88 DE 3815038

(43) Veröffentlichungstag der Anmeldung:
**08.11.89 Patentblatt 89/45**

(84) Benannte Vertragsstaaten:
**DE ES FR GB IT SE**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Brückner, Hartmut**
**Schneckestrasse 6**
**D-8000 München 83(DE)**

(54) **Mehrfach-Startgerät für unterschiedliche Flugkörpertypen.**

(57) Die Erfindung bezieht sich auf ein Mehrfach-Startgerät für unterschiedliche Flugkörper, die von einem Waffenträger abgeworfen bzw. abgeschossen werden, wobei das Startgerät als Schienenträger für unterschiedliche Flugkörper und für unterschiedliche Waffenträger bzw. Flugzeugtypen ausgebildet ist. Ein Ausführungsbeispiel ist beschrieben und in zahlreichen Querschnitten der Aufbau dieses Startgeräts gezeigt.

FIG. 1

### Mehrfach-Startgerät für unterschiedliche Flugkörpertypen.

Die Erfindung bezieht sich auf ein Mehrfach-Startgerät für Flugkörper, die von Waffenträgern - insbesondere Flugzeugen abgeworfen bzw. abgeschossen werden gemäß dem Gattungsbegriff des Anspruchs 1.

Üblicherweise wird für jeden Flugkörper ein für ihn speziell entwickeltes Startgerät verwendet, welches nur durch relativ aufwendige Umbauarbeiten und Änderungen an andere Flugkörper umbaubar ist. Bekannt sind die verschiedenen - auch von der Anmelderin offenbarten - Typen von Waffenschlössern, die so ausgebildet sind, daß sie an verschiedene Waffenträgertypen - vorwiegend Flugzeuge - anpaßbar sind. Auch diese Abwurf-Konzeptionen sind jedoch nur für immer ein und denselben Munitionskörper geschaffen. Alle diese Einrichtungen sind durch ihre Massivbauweise sehr schwer an Gewicht.

Der vorliegenden Erfindung liegt die Aufgabe zugrunde, ein gewichtsleichtes Mehrfachstartgerät der eingangs genannten Art zu schaffen, das nicht nur für verschiedene Waffenträger einsetzbar ist, sondern auch für unterschiedliche Flugkörper.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung ist ein Ausführungsbeispiel erläutert und in den Figuren der Zeichnung dargestellt. Es zeigen :

Fig. 1 einen Längsschnitt des Ausführungsbeispiels eines Startgerätes mit angehängten unterschiedlichen Flugkörpern,

Fig. 2 einen Längsschnitt des Ausführungsbeispiels gemäß Fig. 1 ohne angehängte Flugkörper,

Fig. 3a einen Schnitt entlang der Linie A-A gemäß Fig. 1 und 2,

Fig. 3b einen Schnitt entlang der Linie B-B gemäß Fig. 1 und 2,

Fig. 3c bis 3k jeweils Schnitte gemäß Fig. 1 und Fig. 2.

Der Grundgedanke der vorliegenden Konzeption ist, ein relativ gewichtsleichtes Schienenstartgerät zu schaffen, das nicht nur an die unterschiedlichsten Waffenträger - in erster Linie Flugzeuge - anbaubar ist, sondern das auch unterschiedliche Flugkörper mit unterschiedlichen Längen aufnehmen und abschießen kann, ohne daß Umbauten und große Änderungen vorgenommen werden müssen.

Zur Erfüllung der geforderten Bedingung einer weitgehenden Gewichtsminimierung ist vorgesehen, das Gehäuse 10 des als Lastenträger L ausgebildeten Startgeräts über seine gesamte Länge so auszubilden, daß entsprechend der jeweils dort aufzunehmenden Kräfte der entsprechend geringst mögliche Querschnitt gegeben wird. Das Gehäuse 10 weist also über seine gesamte Länge abschnittsweise unterschiedliche Querschnitte auf. Von einem Grundquerschnitt ausgehend, wie er z. B. in Fig. 3b, 3e etc. dargestellt ist, werden die Querschnitte entsprechend der von ihnen aufzunehmenden Kräfte verstärkt, beispielsweise durch anschraubbare Trägerplatten 19. Im Bereich der Aufhängungen 12 und Tragvorrichtungen 18 wird die obere Gehäusefläche so verstärkt, daß sie als Lastaufnahmeplatte 20 ausreichend stabil ist.

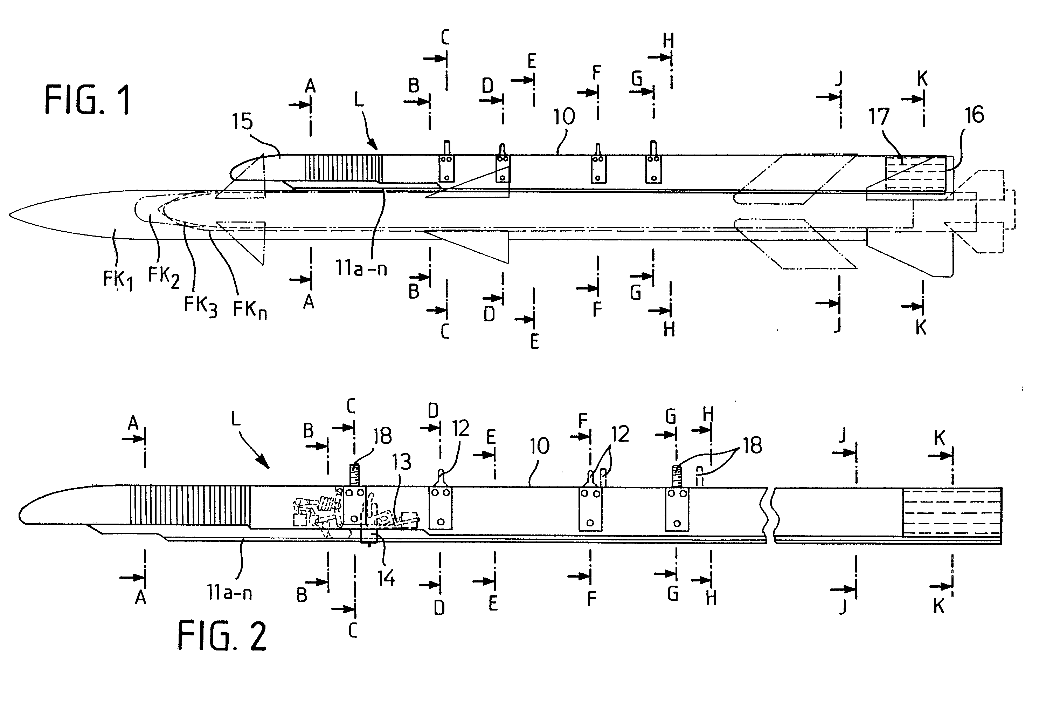

Zur Erfüllung der Bedingung einer zuverlässigen Aufnahme und eines sicheren Starts unterschiedlicher Flugkörper FK 1 bis FK$_n$ ist vorgesehen, daß das Gehäuse 10 neben- und übereinanderliegende Schienenpaare 11a bis 11n aufweist. Die Länge der Schienenpaare 11a - 11n ist der Länge der abzuschießenden Flugkörper angepaßt. In Fig. 1 ist gezeigt, wie die unterschiedlichen Flugkörper FK$_1$ bis FK$_n$ in den Schienen 11a bis 11n lagern. Besondere Erläuterungen hierfür dürften nicht erforderlich sein. Daß jeder Flugkörper mit den Auslöse- und Zündsystemen des Lastträgers L verbunden ist, dürfte selbstverständlich sein.

Die Schienen 11a - 11n sind in ihrer Länge und Anordnung am Gehäuse 10 so integriert, daß für alle anhängbaren Flugkörper FK$_1$ usw. ein gemeinsamer Verriegelungsmechanismus 12, ein gemeinsamer Entriegelungsmechanismus 13 und ein gemeinsamer vorderer Abpratzmechanismus 14 verwendbar ist. Alle drei genannten Einrichtungen sind im Gehäuse 10 untergebracht. Hierbei sind diese Einrichtungen 12, 13, 14 und auch die Tragvorrichtungen 19 für die Befestigung des Startgerätes am Lastenträger L (Flugzeug) in Modulbauweise ausgeführt und können im Gehäuse je nach der gegebenen Aufnahmevorrichtung des Flugzeugs und je nach dem aufzunehmenden Flugkörpertyp positioniert werden. Die Konzeption eines solchen "Mehrfach-Startgerätes" bestimmt bekanntlich schon von vornherein für welche unterschiedliche Waffenträger bzw. Lastträger L und für welche aufzunehmenden und abzuschießenden Flugkörper eine Verwendung vorgesehen ist. Daher können schon bei der Fertigung für die einzelnen vorgenannten Module entsprechende Halterungen, Einschübe etc. vorgesehen werden, in die später vor dem Einsatz problemlos die entsprechenden Stellungkombinationen der vorgenannten Module durchgeführt werden können.

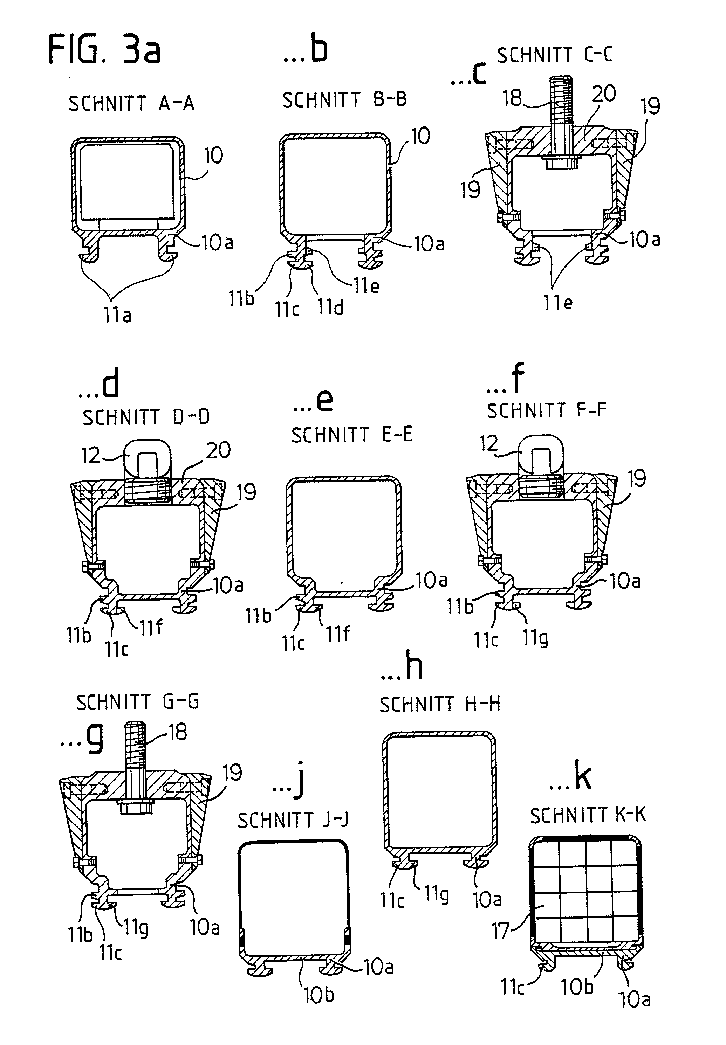

Die Figuren 3a bis 3k zeigen die unterschiedlichen Gehäusequerschnitte des hier beschriebenen Ausführungsbeispiels. Hierbei ist der "Grundquerschnitt" - wie er beispielsweise in Fig. 3b gezeigt ist - ein relativ dünner Gehäusemantel dessen unterer Bodenteil verstärkt ist und integrierte Tragelemente 10a aufweist - im gezeigten Beispiel sind es zwei - in die die Schienen 11a - 11n beispielsweise eingefräst sind. Diese Tragelemente 10a sind also als in Längsrichtung des Startgeräts mit dem Gehäuse 10 integrierte Stangen anzusehen, in die die unterschiedlichen Schienenstränge eingefräst sind. Natürlich ist es denkbar, daß die Schienen 11 an die Tragelemente 10a angeschraubt oder angeschweißt sind.

Vorzugsweise dürfte jedoch das Schienenfräsen angewendet werden, weil mittels elektronischer Fräserführung die unterschiedlichen Schienenverläufe, wie sie in den Figuren 3a bis 3k gezeigt sind, in einem Arbeitsgang erzeugt werden können. So geht die Schiene 11a für den längsten Flugkörper FK 1 in die Schiene 11c für einen anderen Flugkörper -beispielsweise FK 3 über, der also in derselben Schienenbahn laufen kann, jedoch nicht deren ganze Länge benötigt. Um aber vor allem Gewicht einzusparen, sollen die Schienen jeweils nur die unbedingt erforderlichen Längen aufweisen. So ist beispielsweise die Schiene 11e kürzer als die parallel unter ihr liegende Schiene 11d, die bis in den Bereich des Schnittes C geführt ist und dort endet und ab dem Bereich des Schnittes D bis zum Bereich von Schnitt E als Schienenabschnitt 11f verläuft, dort ebenfalls endet und nach dem Abschnitt im Bereich von Schnitt F als Schiene 11g bis zum Bereich von Schnitt i geführt ist und dort endet. Die detailliert gezeichneten Querschnitte der Figuren 3a bis 3k dürften so aussagekräftig sein, daß nicht jede einzelne Schienenkombination beschrieben werden muß.

Die Bug- und die Heckseite des vorgeschlagenen Startgerätes ist mit einer in Leichtbauweise hergestellten Abschlußkappe 14 versehen, die leicht abnehmbar gefertigt ist und in ihrer Form den Erfordernissen einer Strömungsgünstigkeit Rechnung trägt. Das Gehäuse kann auch aus dünnen Blechen oder Kunstfasermatten als mehrzellige Schale ausgebildet sein, wobei in den Leerräumen, vorzugsweise in der hinteren Abschlußkappe 16 die Steuerelektronik für den Start der unterschiedlichen Flugkörper FK 1 bis $FK_n$ integriert ist.

## Ansprüche

1. Mehrfach-Startgerät für Flugkörper, die von Waffenträgern - insbesondere Flugzeugen - abgeworfen bzw. abgeschossen werden, welches in Form eines an der Waffenträger-Zelle einhängbaren und arretierbaren Lastträgers mit den zugehörigen Auslöse- und Zündsystemen für den Abschuß-Start ausgebildet ist, **dadurch gekennzeichnet,** daß das Gehäuse (10) des als Lastträger (L) ausgebildeten Startgeräts über seine gesamte Länge unterschiedliche Querschnitte (A bis K) aufweist, in denen ein oder mehrere neben- und übereinanderliegende Schienenpaare (11a bis 11n) integriert sind, deren Länge und Querschnitt dem jeweiligen aufzunehmenden Flugkörpertyp ($FK_1$ - $FK_n$) entsprechend ausgebildet ist.

2. Startgerät nach Anspruch 1, **dadurch gekennzeichnet,** daß die Schienen (11a - 11n) in ihrer Länge und Anordnung am Gehäuse (10) so integriert sind, daß für alle anhängbaren Flugkörper ($FK_1$ - $FK_n$) ein im Gehäuse (10) angeordneter gemeinsamer Verriegelungs- (12), Entriegelungs- (13) und vorderer Abpratzmechanismus (14) verwendbar ist.

3. Startgerät nach Anspruch 1 oder 2, **dadurch gekennzeichnet,** daß das Gehäuse (10) als mehrzellige Schale mit sehr leichter, auswechselbarer vorderer und hinterer Abschlußkappe (15, 16) ausgebildet ist.

4. Startgerät nach den Ansprüchen 1 bis 3, **dadurch gekennzeichnet,** daß in der hinteren Abschlußkappe (16) die Steuerelektronik (17) für den Start der unterschiedlichen Flugkörper FK integriert ist.

5. Startgerät nach Anspruch 2, **dadurch gekennzeichnet,** daß der im Gehäuse (10) angeordnete Verriegelungsmechanismus (12) und die Tragvorrichtungen (18) für die Befestigung des Gehäuses (10) am Lastträger (L) an unterschiedliche Aufnahme- und Trageinrichtungen anpaßbar ausgebildet sind.

6. Startgerät nach einem oder mehreren der Ansprüche 1 bis 5, **dadurch gekennzeichnet,** daß die Schienen (11) aus in dem Gehäuse (10) integrierten Tragelementen (10a) gefräst sind.

7. Startgerät nach einem oder mehreren der Ansprüche 1 bis 5, **dadurch gekennzeichnet,** daß die Schienen (11) an die mit dem Gehäuse (10) verbundenen Tragelemente (10a) angeschraubt oder angeschweißt etc. sind.

8. Startgerät nach einem oder mehreren der Ansprüche 1 bis 7, **dadurch gekennzeichnet,** daß das Gehäuseunterteil (10b) mit den Tragelementen (10a) und den Schienen (11) ein an das restliche Gehäuse (10) ansetzbares, verbindbares Bauelement bildet.

9. Startgerät nach einem oder mehreren der Ansprüche 1 bis 8, **dadurch gekennzeichnet,** daß im Bereich der größten Lastaufnahme bei den Verriegelungsmechanismen (12) und den Tragvorrichtungen (18) das Gehäuse (10) mit anschraubbaren Verstärkungsplatten (19) versehen ist.

FIG. 1

C
B
A          D    E    F    G    H        J    K

15      L                              10              17      16

FK₁  FK₂
FK₃  FKₙ      11a-n

A    B    D    E    F    G    H        J    K
C

EP 0 340 399 A1

A          C    D          F    G    H        J    K
L        B        18  12    E  10    12    18

13
14

11a-n      B    D    E    F    G    H        J    K
A              C

FIG. 2

FIG. 3a

FIG. 3a
SCHNITT A-A
10
10a
11a

...b
SCHNITT B-B
10
10a
11b 11c 11d 11e

...c
SCHNITT C-C
18 20 19
19
10a
11e

...d
SCHNITT D-D
12 20
19
10a
11b 11c 11f

...e
SCHNITT E-E
10a
11c 11f
11b

...f
SCHNITT F-F
12 19
10a
11b 11c 11g

...g
SCHNITT G-G
18 19
11b 11g 10a
11c

...h
SCHNITT H-H
11c 11g 10a

...j
SCHNITT J-J
10a
10b

...k
SCHNITT K-K
17
11c 10b 10a

10 470

| | EINSCHLÄGIGE DOKUMENTE | | EP 89103213.8 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>GB - A - 2 166 526</u><br>(FRAZER-NASH LIMITED)<br> * Gesamt *<br>---- | 1 | B 64 D 7/08<br>F 41 F 3/06 |
| | | | **RECHERCHIERTE SACHGEBIETE (Int. Cl.4)** |
| | | | B 64 D 7/00<br>F 41 F 3/00 |

Der vorliegende Recherchenbericht wurde für alle Patentansprüche erstellt.

| Recherchenort | Abschlußdatum der Recherche | Prüfer |
|---|---|---|
| WIEN | 20-07-1989 | PIRKER |